# EUROPEAN PATENT APPLICATION

(11) **EP 4 603 821 A1**
(43) Date of publication of application: **20.08.2025**
(21) Application number: 24157598.4
(22) Date of filing: 14.02.2024
(51) Int. Cl.: G01N 17/00, G01N 17/02

(54) **METHOD, DEVICE AND SYSTEM FOR ASSESSING CORROSION PHENOMENA ON AT LEAST ONE METAL ELEMENT**

(71) Applicant: ETH Zurich, 8092 Zürich (CH)
(72) Inventor: ANGST, Ueli, Michael, 8092 Zürich (CH); BIRCHER, Lukas, Anton, Josef, 8092 Zürich (CH); MARTINELLI-ORLANDO, Federico, 8092 Zürich (CH); PFÄNDLER, Patrick, 8092 Zürich (CH)
(74) Representative: Schulz Junghans Patentanwälte PartGmbB

(57) **Abstract**

The application relates to a method for assessing corrosion phenomena on at least one metal element (1), wherein an electrode (5) is in electrically conductive connection with an electrolyte volume (4) positioned outside a metal element (1) or a material (3) that is electrolytically conductive or can be made electrolytically conductive and that is at least partially covering the metal element (1), and wherein the electrolyte volume (4) is brought into electrically conductive contact with the metal element (1) or the material (3) via a stream (10) of electrolyte, and wherein an electrochemical measurement indicative of a state of corrosion on the metal element (1) is carried out.

The application further relates to a device (11) and a system (100) for assessing corrosion phenomena on at least one metal element (1).

## Description

The present invention relates to a method, a device and a system for assessing corrosion phenomena on at least one metal element.

Steel-reinforced concrete is one of the most used materials in the building industry. While it is generally durable, corrosion of the embedded reinforcing steel elements is among the most frequent causes for premature degradation. This has severe consequences for safety, economy, and environment. Detection of corrosion ahead of structural damage is thus of large importance. While various techniques for corrosion inspection exist, it is a major problem that some structural members cannot be inspected, simply because of a lack of accessibility. An example that has received increasing attention in engineering is the degradation and corrosion of the reinforcements of structures such as bridges and tunnels, which were found to show an increased risk for possible corrosion damages (e.g., on entire section of an element or limited to confined areas), but certain areas are hardly reachable to be inspected with any available technology. In particular old or low-quality steel-reinforced concrete structures or those exposed to harsh environments for the steel embedded in the concrete, such as bridges and tunnels exposed to sulfates, chlorides or carbon dioxide, represent sources of danger, as failure or collapse due to corrosion phenomena of the steel elements forming the backbones of such structures can cause fatal accidents and high repair costs. However, this problem is not limited to bridges and tunnels as similar inspection challenges are also met in other cases where a metallic structure is embedded in a particularly porous medium or simply coated with a dielectric material (e.g., polymeric coating).

To tackle this problem, electrochemical measurements coupled with core drillings or probing window are commonly used to locally extract samples of the reinforcing steel element by drilling or chiselling an opening into the concrete structure to access the steel element. However, this procedure might be difficult to perform due to lack of accessibility to the structure, since current methodologies to perform electrochemical measurements require the physical contact of the electrodes to the structure in the location one needs to inspect (e.g., WO 2019084694 A1). In addition, this procedure represents an invasive action that itself negatively affects the concrete structure and its stability. Moreover, this allows to only locally extract and analyze samples, such that possibly dangerous corrosion phenomena on the steel element in the proximity of or generally outside the drill holes or probing window selected for extraction of samples cannot be assessed.

As a largely non-destructive procedure, potential field measurements have gained importance for assessing the state of corrosion of steel elements in concrete structures. For example, WO 2019084694 A1 discloses a method wherein a first electrical port of a voltmeter is electrically connected to a reference electrode, which is brought into electrical contact with a surface of a concrete structure embedding a steel element by drilling a hole through an asphalt overlay covering the concrete structure and filling the hole with a conductive solution, until electrical contact with the electrode located on the asphalt overlay is reached. A second electrical port of the voltmeter is electrically connected to the steel element. By measuring the voltage between the steel element and the reference electrode, state of the corrosion of the steel element may be assessed at the location of the reference electrode. However, the reinforcing steel elements of underground concrete structures are often buried by large layers of material, such as soil, such that this method regularly requires excavation of material covering the concrete structure, so as to get close enough to detect the potential field of the steel element, as the potential field decays with the distance from the steel element. At the same time, bringing the reference electrode into direct contact with the concrete structure for forming an electrical connection can be complex in case of limited access of the concrete structure, for example in case of bridges and tunnels, which typically require the use of heavy machinery and/or scaffolding constructions.

The cost related to corrosion issues, particularly in reinforced concrete structures, was estimated to be in the order of US$2.5 trillion (i.e., equivalent to 3.4% of the global GDP in 2013). By using corrosion control and inspection practices, the cost of corrosion can be significantly reduced of values between 15% and 35%. However, these costs typically do not include the costs to individual safety, environmental consequences, lost revenue, product replacement, replacement cost, and effect on reputation. These latter costs might be particularly relevant for hardly reachable structures where the operators might be exposed to dangerous situations (e.g., climbing on scaffoldings), or where the inspections are performed in negligent way with detrimental consequences for the economics, the population and the environment (e.g., Morandi bridge in Genoa in 2018).

Based on this, it is subject of the present invention to provide a method, a device and a system for assessing corrosion phenomena on at least one metal element, which each permit to assess the state of corrosion on at least one metal element of a structure comprising the metal element in a largely non-destructive manner.

This task is solved by a method for assessing corrosion phenomena on at least one metal element with the features of claim 1, a device for assessing corrosion phenomena on at least one metal element according to claim 7 as well as a system for assessing corrosion phenomena on at least one metal element according to claim 13.

Advantageous embodiments of the invention are given in the corresponding dependent claims and described in the following.

A first aspect of the invention relates to a method for assessing corrosion phenomena on at least one metal element, wherein an electrode is in electrically conductive connection with an electrolyte volume positioned outside a metal element or a material that is electrolytically conductive or can be made electrolytically conductive and that is at least partially covering the metal element, and wherein the electrolyte volume is brought into electrically conductive contact with the metal element or the material via a stream of electrolyte, and wherein an electrochemical measurement indicative of a state of corrosion on the metal element is carried out.

As such, the method according to the invention allows to assess corrosion phenomena of metal elements of concrete structures even if they are covered with the material, such that there is no need to press a sensor against the material covering the metal element, no necessity to excavate or remove large amounts of the material, which may for example comprise or be soil. At the same time, the electrolyte volume is not positioned within the material, which typically requires to introduce the electrolyte volume into the material via bores, excavation shafts and/or pipes. Instead of by positioning the electrolyte volume in the material, the electrically conductive contact between the electrode and the metal element or the material is established via said stream of electrolyte realizing an electrically conductive bridge between the electrode and the metal element or the material.

The state of corrosion on or of the metal element may include an electrochemical state or an electrochemical process.

The electrically conductive contact between the electrode and the metal element or between the electrode and the material can be such that the stream is realizing the only electrically conductive contact between the electrode and the metal element or the material in an impact area of the metal element or the material, where the stream impacts on the metal element or the material. In other words, there may be no further structures such as for example pipes, drainage lines or excavation shafts that realize an electrical connection between the electrode and the material in said impact area. As such, the stream may realize a direct electrically conductive contact between the electrode and the metal element or the material. For example, to this end, the stream may be directed through a gas such as air surrounding a bare metal element or a material realizing an outside of a wall, a floor and/or ceiling and that is covering a metal element, in order to carry out the electrochemical measurement by establishing electrically conductive contact between the electrode and the metal element or the material through said atmospheric gas.

For example, the stream may be conducted in the form of a jet out of an opening of a container and extend along a flow path with flow path lengths between 1 µm and 10 m, particularly between 1m and 10m, wherein the flow path corresponds to the length of the stream extending between the opening of the container and the impact area of the stream on the metal element or the material.

The metal element to be investigated with this method can be bare exposed to a gas phase such as atmospheric air or can be covered by or embedded in a material, for example a dielectric such as polymeric coating. The material can be a porous material such as for example concrete, mortar or soil. In the context of the present invention, a "bare" metal element is to be understood as a metal element that is not covered by said material.

The material can be made electrolytically conductive by introducing the electrolyte into the material. As such, the method according to the invention can also be applied to dry and/or porous materials such as for example gravel or concrete by making the material electrolytically conductive, for example by watering the material before carrying out the method according to the invention.

The material may for example be concrete, such that the invention allows to assess corrosion phenomena on metal-reinforced concrete structures, such as for example bridges and tunnels.

Since corrosion phenomena on metal elements in concrete structures are usually caused by electrochemical processes, they can be detected using electrochemical measurements or methods. For example, the electrochemical measurement according to the invention comprises at least one of the following: potential measurements, particularly potential field measurements and half-cell potential measurements; electrochemical impedance measurements; galvanostatic- or potentiostatic polarization- as well as galvanodynamic- or potentiodynamic polarization measurements, for instance linear polarization resistance measurements; Harmonic analysis or Faradaic rectification measurements as well as other electrochemical methods in general.

As an underlying process, for example ingress of moisture, carbon dioxide and/or chloride through cracks, honeycombs or gaps of the concrete structure causes regions of the metal element to become subject to corrosion, wherein the affected regions turn anodic. In turn, regions that are not subject to corrosion, represent cathodic regions. As a consequence, a spatial, three-dimensional electrochemical environment, e.g. potential field, around regions of corrosion of the metal element is indicative of the state of corrosion of the metal element. For example, the metal element is a steel element. The electrochemical measurement according to the invention allows to obtain and to measure a physical quantity related to the electrochemical environment, thereby representing information indicative of the state and location of corrosion in the area of the metal element. While the potential field measurement takes advantage of the intrinsic potential field generated by the regions subject to corrosion themselves, the potential field and/or electrical quantities related to the corrosion state and/or the electrochemical environment may be additionally excited in the electrochemical measurements, so as to increase the accuracy of the measurement or to obtain additional information.

In a first example for a potential field measurement indicative of the state of corrosion, an electrical potential difference or a voltage between the electrode and the metal element is measured, for example using a voltmeter. To this end, a first electrical port of the voltmeter is electrically connected to the metal element, which may require a single local bore through the material so as to access the metal element, depending on the arrangement of the metal element and the material. A second electrical port of the voltmeter is electrically connected to the electrode, such that the electrical potential difference or electrical voltage between the electrode and the metal element may be determined at the corresponding location of the electrode. A value of the potential difference or voltage measured at this location corresponds to or is indicative of a value of the spatial potential field at this location. More negative measured potential values or higher potential gradients typically point to a more critical state of corrosion and less negative measured potential values point to a less critical state of corrosion.

In a second example for a potential field measurement indicative of the state of corrosion, the electrical connection to the steel element is replaced with an electrical connection to a reference electrode. The reference electrode may be a stationary reference electrode which is kept at a fixed location. By measuring the potential difference or voltage between the electrode and the reference electrode, the value of the potential field at the location of the electrode may be determined. The electrode may be moved to different locations and multiple potential field measurements may be carried out, such that the potential field is determined at the different locations, improving the resolution of the measured spatial potential field.

In a third example for a potential field measurement indicative of the state of corrosion, the electrode is electrically connected to a reference electrode as in the second example, wherein the electrode and the reference electrode are moved together while keeping a fixed distance between the electrode and the reference electrode. In particular, in this third example, a gradient of the measured potential difference or voltage between the electrode and the reference electrode is determined.

Alternatively or additionally, the state of corrosion may be assessed by means of a linear polarization resistance measurement.

For example, the linear polarization resistance is determined in a potentiostatic sweep measurement/method. Here, in a three-electrode setup a constant predetermined electrical potential is applied to the metal element serving as a working electrode, and the resulting current flow between the counter electrode and the metal element is measured under stationary conditions, that is for large timescales. This measurement can also be performed in a two electrodes configuration setup, where the counter and reference electrode coincide.

The polarization resistance may also be determined by an impedance measurement. Here, in a three-electrode setup an alternating voltage as a function of its frequency (f) is applied between the metal element and the reference electrode with a predetermined amplitude and the resulting current flow between the counter electrode and the metal element is measured in the frequency space, wherein an impedance spectrum is obtained. The polarization resistance may then be determined by extrapolating the impedance spectrum towards f → 0. This measurement may also be performed in a two-electrode setup, where the counter and reference electrode coincide.

Moreover, the polarization resistance may be determined in a galvanostatic pulse measurement. Here, in a three-electrode setup, a current pulse of predetermined time and amplitude is applied between metal element and the counter electrode and the resulting potential difference between the reference electrode and the metal element is measured as a function of time. The polarization resistance may then be determined by analyzing the response in the time domain with equivalent circuits. This measurement may also be performed in a two-electrode setup, where the counter and reference electrode coincide.

Particularly, a small polarization resistance corresponds to a more critical state of corrosion and a large polarization resistance corresponds to a less critical state of corrosion.

Alternatively or additionally, the state of corrosion may be assessed by means of a Faradaic rectification measurement. Here, an external alternating voltage is applied between the electrode and the metal element and the resulting change in direct current measured gives information on the corrosion state.

According to an embodiment of the invention, the stream of electrolyte passes through an opening of a container for receiving the electrolyte volume. The electrolyte inside the electrolyte volume can be pressurized at an electrolyte pressure above a gas pressure of a gas surrounding the container, such that the electrolyte passes through the opening of the container due to a pressure difference between the electrolyte pressure and the gas pressure If the stream of electrolyte passes through said opening of the container it may also be referred to as a "jet". For example, the opening of the container comprises or is a nozzle.

In another embodiment of the invention, the stream of electrolyte is subsequently directed to different locations on the metal element or the material, such that the stream of electrolyte subsequently establishes an electrically conductive connection between the electrode and the metal element or between the electrode and the material at different locations, and wherein electrochemical measurements are carried out at atleast one of the locations, such that spatial information indicative of the state of corrosion is obtained in an area comprising the at least two locations of the metal element or the material. Multiple locations, that is, at least two locations, on the material or the metal element can be measured by performing respective electrochemical measurements at these locations, such that spatial information indicative of the state of corrosion is obtained in an area of the metal element or the material comprising the at least two locations. As such, spatial information regarding the state of corrosion of the metal element can be obtained by electrochemical measurements carried out at the one or more locations.

The stream of electrolyte subsequently establishes an electrically conductive connection between the electrode and the metal element or between the electrode and the material at different locations on the surface of the metal element or the material.

In an embodiment of the invention, the electrochemical measurements are carried out while keeping the stream of electrolyte at respective locations for a predetermined electrochemical measurement time. For example, the stream of electrolyte may be first directed to a first location of the different locations and kept at the first location for said predetermined electrochemical measurement time in order to measure a first measurement value indicative of the state of corrosion of the metal element at the first location. Once the first measurement value is obtained, the stream of electrolyte may be moved to a second location of the different locations and kept at the second location for said predetermined electrochemical measurement time in order to measure a second measurement value indicative of the state of corrosion of the metal element at the second location. This process may be repeated for subsequent locations in order to gain spatial information about the state of corrosion of the metal element by means of multiple measurement values. For example, the predetermined measurement time is between 0.01 seconds and several minutes, for example 2 to 20 minutes. Two locations at which successive electrochemical measurements are carried out may be spaced less than a characteristic measurement distance. The characteristic measurement distance is preferably chosen to be less than 1 m, which is smaller than the length scale over which the state of corrosion is known to vary substantially. For example, the stream, that is the impact area of the stream on the metal element or the material, is moved by 15 cm to 100 cm between two subsequent electrochemical measurements. Additionally, the electrolyte stream can be moved on the metal element or material to continuously perform electrochemical measurements with a given temporal and spatial resolution, wherein the temporal resolution depends on said predetermined measurement time and wherein the spatial resolution depends on the characteristic measurement distance and/or the locations chosen for the electrochemical measurements.

In yet another embodiment of the invention, the electrochemical measurements are carried out while moving the stream of electrolyte between different locations on the metal element or the material. As such, the state of corrosion of the metal element may be determined in a continuous manner along a predetermined path on the material. For example, the predetermined path may comprise a plurality of lines extending over the material, such that a map reflecting the spatial potential field on the surface of the material may be obtained. The stream may for example be moved between different locations with a velocity of between 1 µm/s and 10 m/s, which is fast enough to efficiently probe large areas and slow enough to ensure reliable electrochemical measurements.

According to another embodiment of the invention one of the following parameters is varied: a flow rate of the stream of electrolyte; a stream diameter of the stream of electrolyte; a flow path of the stream of electrolyte; a distance between the opening of the container and the metal element or between the opening of the container and the material. For example, the aforementioned parameters may be varied by means of a nozzle realizing the opening of the container and/or an electrolyte pump. The flow rate can for example be varied between 0.1 I/minute and 100l/minute. The stream diameter can for example be varied between 1 µm and 10 cm. The flow path may for example be varied by performing a pivotal and/or a translational movement of the opening of the container or nozzle with respect to the metal element. Varying the flow path can for example comprise a variation of a distance between the opening of the container and the metal element or a distance between the opening of the container and the material.

In another embodiment of the invention, a volume of the container, a volume of the electrolyte storage and/or a volume of the electrolyte supply line is configured to be compressed to generate the stream of electrolyte out of the opening of the container. To this end, for example, the container, the electrolyte storage and/or the electrolyte supply line may comprise or consist of a flexible material that allows for a compression of the respective volume, such that electrolyte can be ejected out of the opening of the container by compressing the respective volume. The compression may be performed for example manually by means of a user and/or automatically, for instance by a mechanical device executing the compression.

A second aspect of the invention relates to a device for assessing corrosion phenomena on at least one metal element. The device comprises an electrode for forming an electrically conductive connection with an electrolyte volume that is or can be received by a container of the device, wherein the device is configured to bring the electrolyte volume into electrically conductive contact with the metal element or a material that is electrolytically conductive or can be made electrolytically conductive and that is at least partially covering the metal element by means of a stream of electrolyte generated out of an opening of the container, and wherein the device further comprises a measuring unit for measuring a signal indicative of a state of corrosion on the metal element.

The device according to the second aspect of the invention can be configured to execute the method according to the first aspect of the invention.

In an embodiment of the invention, the device comprises an electrolyte supply line for supplying the container with electrolyte. For example, the electrolyte supply line is a flexible tube, such that the container can be moved to different locations under flexing of the flexible tube, which simplifies the use of the device particularly if electrochemical measurements are to be performed in large areas. The electrolyte supply line may for example be connected to a local electrolyte reservoir, such as a local water supply.

The container can be formed by at least a portion of the electrolyte supply line.

Alternatively, the container can be separated from the electrolyte supply line, wherein the container and the electrolyte supply line can be connected to each other so as to allow the electrolyte to flow from the electrolyte supply line into the container. According to another embodiment of the invention, the device comprises an electrolyte storage, such that the electrolyte can be conducted from the electrolyte storage to the container via the electrolyte supply line.

In yet another embodiment of the invention, the electrode is at least partially arranged or arrangeable in the container or in the electrolyte supply line. Arranging the electrode at least partially inside the container and thus in close proximity to the stream leads to a good stability of the electrical connection between the electrode and the material via the stream.

In an alternative embodiment of the preceding embodiment, the electrode is at least partially arranged or arrangeable in the electrolyte storage. This allows for an electrolytically conductive connection between the electrode and the electrolyte volume. As such, when the container of the device is moved together with the electrolyte supply line in order to probe the state of corrosion of the metal element at different locations, electrical connections between the electrode and a measuring device for performing the electrochemical measurements do not need to be moved, which reduces the risk of damage to the electrical connections.

A third aspect of the invention relates to a system for assessing corrosion phenomena on at least one metal element. The system comprises the device according to the second aspect of the invention and a vehicle configured to carry at least the container of the device, such that the stream of electrolyte can establish an electrically conductive connection between the electrode and the metal element or said material at least partially covering the metal element at at least one location with respect to the metal element by moving the container with respect to the metal element and the at least one location using the vehicle.

For example, the vehicle of the system can carry the container to a location with limited access, such as ceilings, columns, bridges and the like, such that the electrically conductive connection between the electrode and the metal element or said material can be realized at this location.

According to an embodiment of the invention, the vehicle is configured to carry at least the container of the device, such that the stream of electrolyte can establish an electrically conductive connection between the electrode and the metal element or said material at least partially covering the metal element at different locations with respect to the metal element by moving the container with respect to the metal element and the locations using the vehicle. As such, moving the container using the vehicle likewise allows to perform electrochemical measurements at different locations, which allows to gain spatial information about the state of corrosion of the metal element.

The system according to the third aspect of the invention can be used to perform the method according to the first aspect of the invention.

In an embodiment of the invention, the vehicle is or comprises one of the following: a land vehicle, a watercraft or an aircraft. For example, in case of a land vehicle, the vehicle is a car. For instance, in case of a watercraft, the vehicle is a boat. In another example, in case of an aircraft, the vehicle is a drone. The vehicle can be motorized or non-motorized.

Since the system according to the third aspect of the invention comprises the device according to the second aspect of the invention and can be used to perform the method according to the first aspect of the invention, the embodiments of the first aspect of the invention may be applied to the second and/or the third aspect of the invention and vice versa.

Exemplary embodiments are described below in conjunction with the Figures. The Figures are appended to the claims and are accompanied by text explaining individual features of the shown embodiments and aspects of the present invention. Each individual feature shown in the Figures and/or mentioned in the text of the Figures may be incorporated (also in an isolated fashion) into a claim relating to the method, the device and/or the system according to the first, second and/or the third aspect of the present invention.
- Fig. 1: shows a cantilever retaining wall comprising a metal element, wherein the cantilever retaining wall secures an embarkment;
- Fig. 2: shows a method for assessing corrosion phenomena according to the prior art, wherein a core sample is taken out of the retaining wall so as to assess the corrosion of the metal element;
- Fig. 3: shows a method for assessing corrosion phenomena according to the prior art, wherein the cantilever retaining wall is partially removed in order to create an inspection window for assessment of the corrosion of the metal element from a front side of the cantilever retaining wall;
- Fig. 4: shows a method for assessing corrosion phenomena according to the prior art, wherein an inspection shaft is excavated at a back side of the cantilever retaining wall facing the embarkment for assessing the corrosion on the metal element;
- Fig. 5: shows an embodiment of a method, device and system for assessing corrosion phenomena according to the invention, wherein a drone is used as a vehicle;
- Fig. 6: shows another embodiment of a method and device for assessing corrosion phenomena according to the invention, wherein the device can be carried by a user;
- Fig. 7: shows yet another embodiment of a method, device and system for assessing corrosion phenomena according to the invention, wherein a car is used as a vehicle;
- Fig. 8: shows an embodiment of a method and device for assessing corrosion phenomena according to the invention, wherein the electrode is arranged in a container out of which the stream of electrolyte is emitted;
- Fig. 9: shows another embodiment of a method and device for assessing corrosion phenomena according to the invention, wherein the electrode is arranged in an electrolyte storage;
- Fig. 10: corresponds to the embodiment of Fig. 8, wherein the stream of electrolyte is directed onto a coating of a metal element instead of concrete covering a metal element;
- Fig. 11: shows a series of five subsequent electrochemical measurements performed while keeping the stream of electrolyte at respective locations on the material, in order to gain spatial information about the state of corrosion of the metal element;
- Fig. 12: depicts respective measured signals measured at the respective locations shown in Fig. 11, indicating spatial information about the state of corrosion of the metal element; and
- Fig. 13: shows a series of five subsequent electrochemical measurements performed while moving the stream of electrolyte between different locations on the material, in order to gain spatial information about the state of corrosion of the metal element.

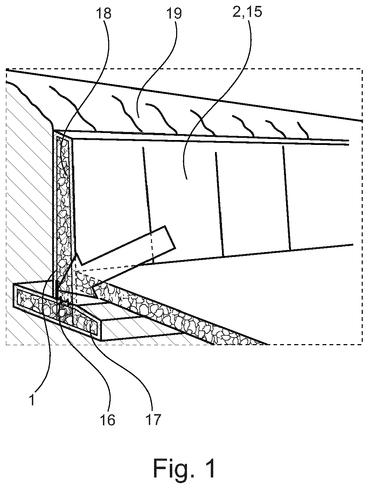

Fig. 1 shows a material 3 by means of a concrete structure 2, in particular a cantilever retaining wall 15 for securing an embankment 19. Cantilever retaining walls 15 are reinforced concrete structures 2 which usually comprise a foundation slab 17 and a stem 18 connected by a construction joint 16. The slope pressure on the stem 18 causes a bending moment on the construction joint 16 between the foundation slab 17 and the stem 18. This bending moment causes high tensile forces on the construction joint 16. Concrete has a high compressive strength but a statically negligible tensile strength, this tensile strength is ensured or taken over by metal elements 1, particularly steel elements forming a reinforcement. Due to the high tensile forces on the slope side between the foundation slab 17 and the stem 18, an intact metal element 1, particularly steel element in the area above of the construction joint 16 is essential for the load-bearing capacity of the cantilever retaining wall 15. This section of the metal element 1, particularly steel element has been indicated in Fig. 1 with the arrow and additionally highlighted with a thicker line, as it is of special interest for the inspection of cantilever retaining walls 15. As can be seen here, the metal element 1 in this example forms a network of multiple interconnected sections extending both vertically and horizontally in the shown cross-section and extends along the entire length of the cantilever retaining wall 15.

However, the metal element 1 is particularly vulnerable to corrosion phenomena, which deteriorate its structural stability and as such the stability of the cantilever retaining wall 15. At the same time, the construction joint 16 and particularly the metal element 1 in the area above of the construction joint 16 are subject to high forces, such that advanced corrosion phenomena on the metal element 1 may ultimately result in unannounced collapses of the cantilever retaining wall 15. It is therefore necessary to regularly assess the state of corrosion on the metal element 1 in the area above of the construction joint 16 in order to reduce the risk of collapses, which represent a source of danger for people and cause high costs.

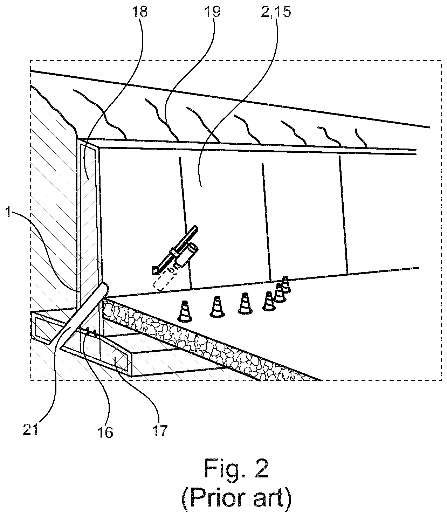

Fig. 2 sketches a method for assessing corrosion phenomena according to the prior art. In this method, core drillings are used to locally extract core samples of the metal element 1 in the area above of the construction joint 16 by drilling a drill hole 21 through the cantilever retaining wall 15 in order to assess the metal element 1 in the area of the construction joint 16. The core sample is then analyzed regarding its state of corrosion. This method is inconvenient at least because of the following. First, the drilling of drill holes 21 to extract core samples represents an invasive method that affects the stability of the cantilever retaining wall 15. Second, this method only allows to locally, that is at the location of the drilling, assess the state of corrosion on the metal element 1. The drill holes 21 and the extracted core samples typically have a diameter of around 30 cm, such that the assessment of the state of corrosion is constricted to this order of magnitude for each sample according to this method. As a consequence, potentially dangerous corrosion phenomena in the proximity of or generally outside the drill holes 21 selected for extraction of core samples cannot be assessed using this method. Moreover, the more locations are chosen for drillings to generate a more accurate picture of the state of corrosion on the metal element 1, the more the stability of the cantilever retaining wall 15 is harmed by this destructive method. Third, the analysis of the extracted sample involves further steps, such as separation of the metal element 1 from concrete material and for example a visual analysis.

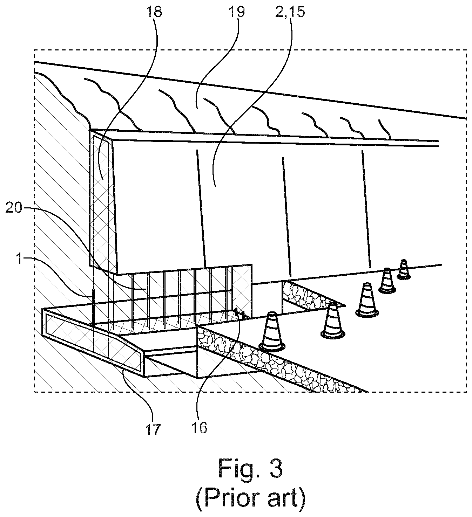

Fig. 3 illustrates another method for assessing corrosion phenomena according to the prior art. According to this method, the concrete of the cantilever retaining wall 15, particularly its stem 18, is partially removed in order to create an inspection window 20 for inspection of the metal element 1 from a front side of the cantilever retaining wall 15 facing away from the embarkment 19. The concrete may thereby for example be removed by high water pressure or other techniques known from the prior art. The inspection window 20 may extend several meters along the metal element 1, such that the state of corrosion may be assessed along the entire extent of the inspection window 20 with this method. Nevertheless, this method is still inconvenient as it also represents a destructive method that may itself cause a loss of stability of the cantilever retaining wall 15 due to the removal of concrete, particularly in the area of the construction joint 16. Moreover, while the inspection window 20 allows for a larger region of the metal element 1 to be analyzed regarding its state of corrosion compared to the method depicted in Fig. 2, it is still constricted to the extent of the inspection window 20, such that the state of corrosion of the metal element 1 may not be assessed outside the inspection window 20. As such, potentially dangerous corrosion phenomena outside of the inspection window 20 selected for inspection cannot be assessed using this method.

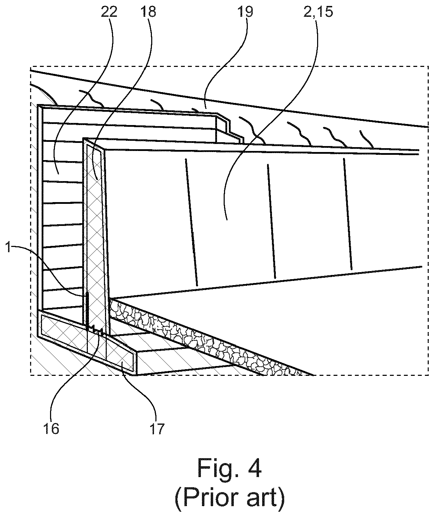

Fig. 4 depicts yet another method for assessing corrosion phenomena according to the prior art. Here, an inspection shaft 22 is excavated at a back side of the cantilever retaining wall 15 facing the embarkment 19 in order to inspect the metal element 1. As such, this method permits to assess the state of corrosion on the metal element 1 along the extent of the inspection shaft 22 while ideally keeping the structure of the cantilever retaining wall 15 near the inspection shaft 22 intact. However, this method requires the excavation of large quantities of soil and/or gravel comprised by the embarkment 19, making the method complex and expensive. At the same time, the assessment of the state of corrosion remains constricted to the region of the excavated inspection shaft 22, such that potentially dangerous corrosion phenomena outside the excavation shaft 22 selected for inspection cannot be assessed using this method.

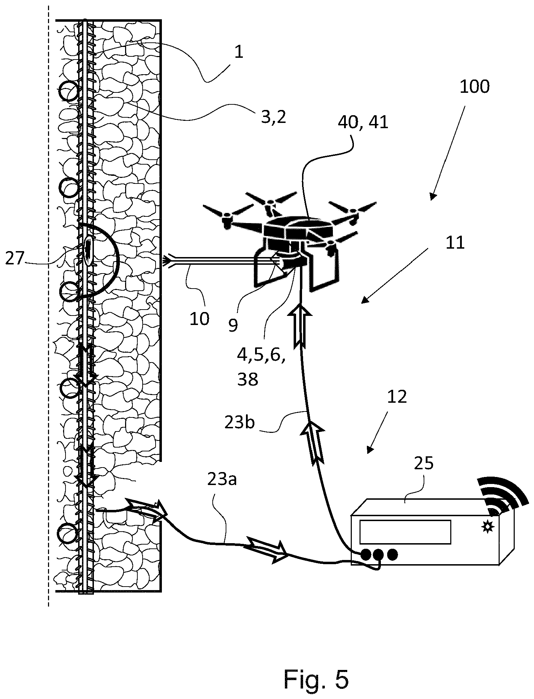

Fig. 5 shows an exemplary embodiment for a method, a device 11 and a system 100 for assessing corrosion phenomena on at least one metal element 1 according to the invention. In the present embodiment, the state of corrosion of a metal element 1 that is covered by a material 3 by means of concrete 2 is to be determined. To this end, the system 100 comprises the device 11 as well as a vehicle 40. In the present embodiment, the vehicle 40 is an aircraft by means of a drone 41. The drone 41 is configured to carry a container 6 of the device 11, wherein the container 6 is configured to receive an electrolyte volume 4 that is in electrically conductive connection with an electrode 5. The device 11 is configured to generate a stream 10 of electrolyte out of an opening 9, such as a nozzle, of the container 6 to bring the electrolyte volume 4 inside the container 6 into electrically conductive contact with the concrete 2 covering the metal element 1. To this end, for example, the device 11 may comprise a pump for pumping electrolyte out of the opening 9 in a stream 10 of electrolyte. As such, a signal indicative of the state of corrosion of the metal element 1 can be measured by means of a measuring unit 12 of the device 11. The measurement 12 unit comprises a measuring device 25 configured to perform potential field measurements, a first electrical wire 23a that realizes an electrical connection between the measuring device 25 and the metal element 1 as well as a second electrical wire 23b that realizes an electrical connection between the electrode 5 which is in electrical connection with the electrolyte volume 4 in the container 6. As such, a potential field measurement can be performed by measuring a signal indicative of the state of corrosion on the metal element 1 by means of an electrical potential difference and/or an electrical voltage between the metal element 1 and the electrode 5, while the electrode is in electrically conductive connection with the concrete 2 covering the metal element 1. For example, the container 6 may be configured to receive an electrolyte volume 4 between 0.001 and 10000 I.

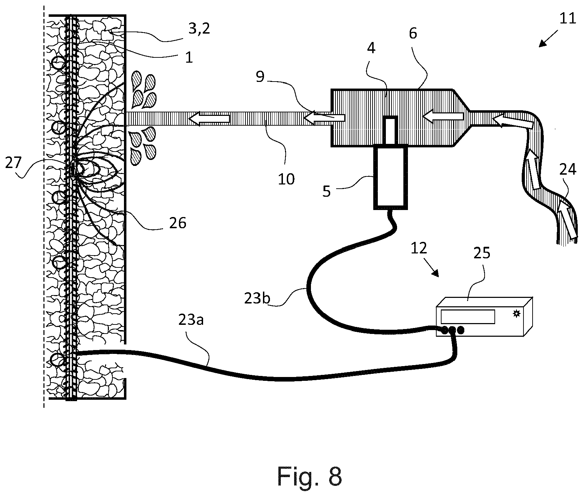

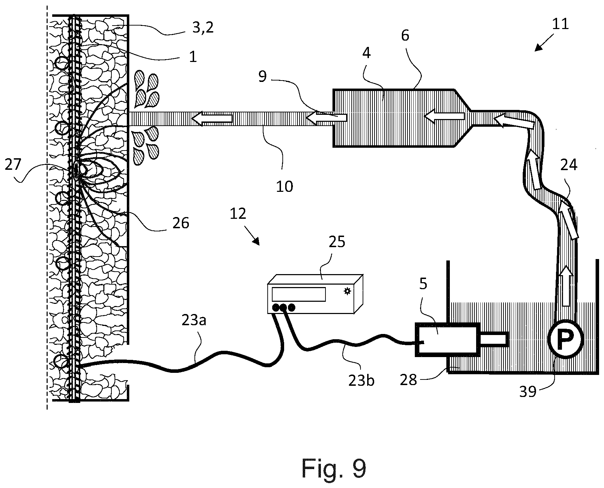

In principle, the metal element 1 is in a passive state due to the surrounding alkaline concrete structure 2, which reduces the corrosion rate to a level that is no longer technically relevant. However, the corrosion behaviour of the metal element 1 can be changed by various mechanisms, which leads to modification from passivity, that is negligible corrosion rate, to activity, that is significant corrosion rate, over time. In the case of concrete structures 2 reinforced by metal element 1, particularly cantilever retaining walls 15, bridges or tunnels, in particular the following three main corrosion mechanisms can be distinguished: corrosion by chlorides, corrosion by carbonation, corrosion due to insufficient concrete cover, that is, exposure to different environment than concrete. For the structural safety of cantilever retaining walls 15, bridges, and tunnels corrosion by chlorides and by insufficient concrete cover are the most important. Corrosion damages caused by chloride ingress, for example from de-icing agents from roads and structural deficits, such as cracks and/or voids can therefore occur heterogeneously along the reinforced concrete structure. As an example, the metal element 1 sketched in Fig. 5 comprises a corrosion region 27 with an advanced state of corrosion. Due to its electrochemical nature, the corrosion goes along with a migration of ions and electrons, causing different electric potentials in regions of accumulations of opposite charges. In particular in case of corrosion related to chlorides, the corresponding electrical potential differences between anodic corrosion regions 27 and cathodic regions of the metal element 1 not affected by corrosion may correspond to voltages of several hundred mV. If the electrolytical connection between the metal element 1 and the measuring device 25 is in proximity of the region of the metal element 1, the measured potential differences or voltages indicate deviations from a metal element 1 with corrosion. As such, larger absolute values of the potential differences or voltages correspond to a stronger state of corrosion and vice versa. The potential differences are thus indicative for the state of corrosion and can be measured using conventional electronic measurement equipment or -devices. The three-dimensional spatial distribution of the potential field around the corrosion region 27 shown in Figs. 8 and 9 is indicated with isopotential lines 26.

To gain spatial information about the state of corrosion of the metal element 1, the drone 41 may be steered to different positions with respect to the metal element 1 and the concrete 2 covering it, such that the stream 10 of electrolyte can probe the potential difference and/or the electrical voltage between the metal element 1 and the concrete 2 at different locations. Moreover, the device 11 can comprise a stream control device 38 for controlling a flow rate of the stream 10 of electrolyte, a stream diameter and/or a flow path of the stream 10 of electrolyte.

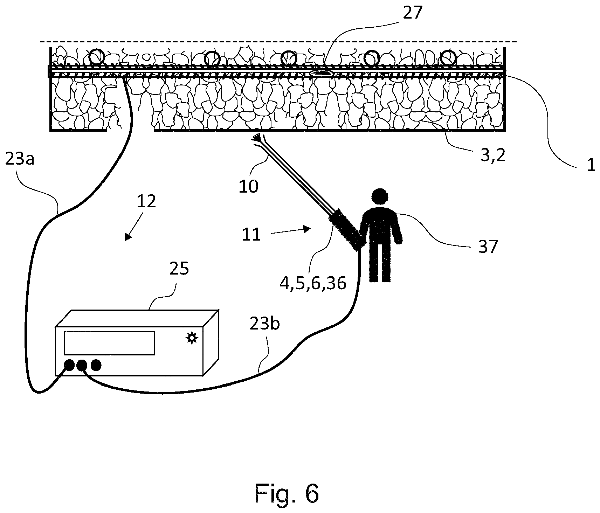

Fig. 6 shows another embodiment of the method and device 11 of the invention. In the present embodiment, the electrolyte volume 4 with the electrode 5 and the container 6 are arranged in or on a carrier 36 of the device 11, such that these components of the device 11 can be carried by a user 37. The user may then manually direct the stream 10 to different locations on the material 3, in the present embodiment to different locations on the concrete 2, in order to perform electrochemical measurements indicative of the state of corrosion on the metal element 1 at different locations. As in the embodiment of Fig. 5, the electrochemical measurements may be performed by a measuring unit 12 with a measuring device 25 and electrical wires 23a,23b contacting the metal element 1 and the electrode 5, respectively.

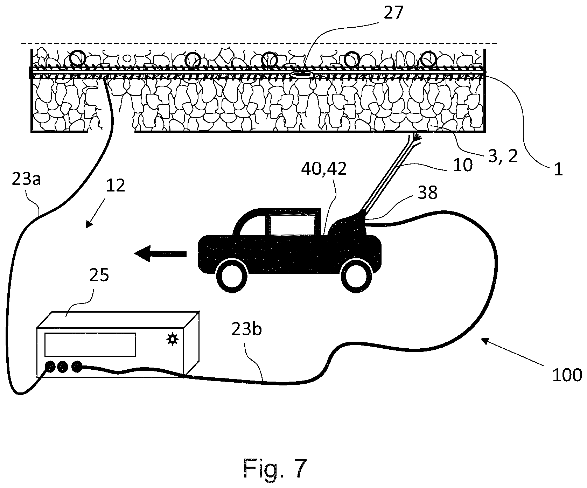

Fig. 7 depicts another embodiment of the method, device 11 and system 100 according to the invention. According to the present embodiment, the vehicle 40 of the system 100 is a land vehicle by means of a car 42. As such, spatial information on the state of corrosion on the metal element 1 may be gained by driving the car 42 to different locations with respect to the metal element 1. The car 42 can be equipped with a stream control device 38 for controlling the flow rate of the stream 10, a stream diameter of the stream 10 of electrolyte and/or a path of flow of the stream 10 between the car 42 and the material 3. As in the embodiments of Figs. 5 and 6, the electrochemical measurements may be performed by a measuring unit 12 with a measuring device 25 and electrical wires 23a,23b contacting the metal element 1 and the electrode 5, respectively.

Fig. 8 shows another embodiment of the method and the device 11 according to the invention. In Fig. 8, isopotential lines 26 indicate the spatial electrical potential field distribution around the corrosion region 27. In the present embodiment, the electrode 5 is arranged partially in the in the electrolyte volume 4 received by the container 6 of the device 11. The electrode 5 is electrically connected to the measuring device 25 of the measurement unit 12 via the second electrical wire 23b, wherein a first electrical wire 23a is establishing a direct electrical connection between the measuring device 25 and the metal element 1 to be investigated. Electrolyte is pumped via an electrolyte supply line 24 through the container 6, which results in a stream 10 of electrolyte out of the opening 9 of the container, thereby establishing an electrically conductive contact between the material 3 covering the metal element 1 and the electrode 5, such that an electrochemical measurement indicative of the state of corrosion on the metal element 1 can be carried out. Arranging the electrode 5 at least partially inside the container 6 and thus in close proximity to the stream 10 leads to a good stability of the electrical connection between the electrode 5 and the material 3 via the stream 10. For example, the electrolyte supply line 24 may be connected to a local electrolyte reservoir, such as a local water supply.

Fig. 9 shows another embodiment of the method and the device 11 according to the invention. Compared to the embodiment of Fig. 9, the device 11 of the present embodiment additionally comprises an electrolyte storage 28 for storing electrolyte as well as an electrolyte pump 39 for pumping electrolyte from the electrolyte storage 28 via the electrolyte supply line 24 to the container 6, such that said stream 10 of electrolyte can be generated out of the opening 9 of the container 6. Other than the embodiment of Fig. 9, the electrode 5 is in the present embodiment at least partially arranged in the electrolyte storage 28. As such, when the container 6 of the device 11 is moved together with the electrolyte supply line 24 in order to probe the state of corrosion of the metal element 1 at different locations, the second electrical wire 23b does not need to be moved, which reduces the risk of damage to the second electrical wire 23b.

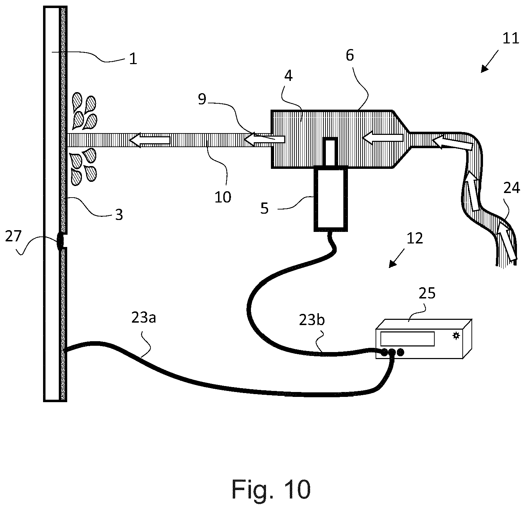

The device 11 shown in Fig. 10 corresponds to the device 11 shown in Fig. 8, wherein the device 11 is not used to assess corrosion phenomena on a metal element 1 covered by concrete 2, but to assess corrosion phenomena on a metal element 1 covered by a material 3 by means of a coating. Just like in the case of concrete 2, the material 3 by means of said coating is brought into electrically conductive contact with the electrode 5 via the stream 10 of electrolyte. In the same fashion, corrosion phenomena can be assessed on a bare metal element 1, i.e. a metal element 1 that is not covered by material 3, by directing the stream 10 of electrolyte directly onto the metal element 1. The stream 10 of electrolyte for can be generated by means of said electrolyte pump 39 and/or by compression of the container 6, for example by manually squeezing the container 6.

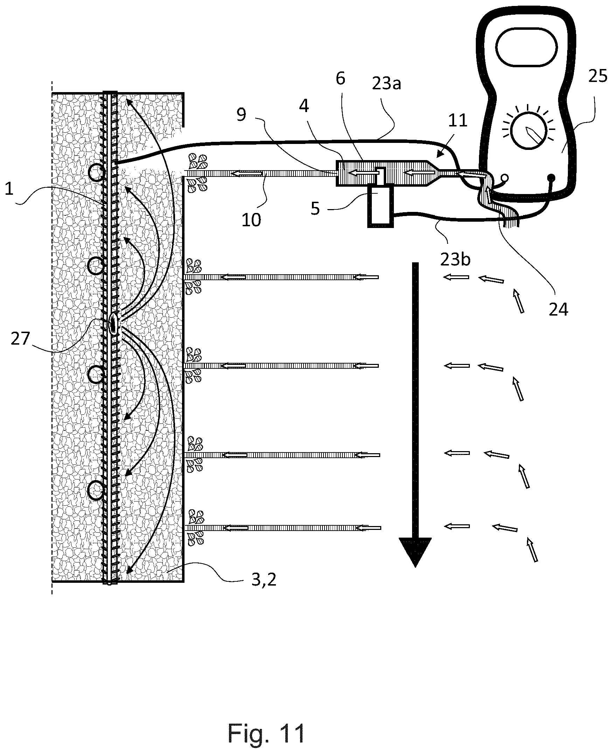

Fig. 11 shows another embodiment of the method and the device 11 according to the invention. Here, a material 3 by means of a concrete structure 2 is reinforced with a metal element 1, such as a steel element. The potential field distribution around the metal element 1 is assessed by establishing an electrically conductive connection between the electrode 5 and the concrete 2 via the stream 10 at different locations. To this end, the container 6 may be moved subsequently to the different locations along the arrow shown in Fig. 11, wherein for each location, the stream 10 is kept at the respective location for a predetermined measurement time in which the electrochemical measurement is performed. Upon the predetermined measurement time, the stream 10 may be directed to the next location for performing the next electrochemical measurement. For example, in case of a potential field measurement, the predetermined measurement time is between 0.001 seconds and several minutes, for example 2 to 20 minutes. For each location of the stream 10 of electrolyte on the material 3, a respective value of the potential field at the respective location is probed by the measuring device 25 that may for example be a conventional multimeter.

The electrolyte can be pumped for at least the time period of a single electrochemical measurement at the respective location so as to maintain the electrically conductive contact between the electrode 5 and the metal element 1 or the material 3 for the time period of the electrochemical measurement. Once the electrochemical measurement at the respective location is finalized, the pumping of the electrolyte causing the ejection of the stream 10 may be stopped such that no electrolyte is wasted. Now, the stream 10 may be directed to the next location and the following electrochemical measurement may be performed. The process of pumping, stopping the pumping and moving to another location may be repeated multiple times, such that the information indicative for the state of corrosion in the area of the metal element 1 is obtained.

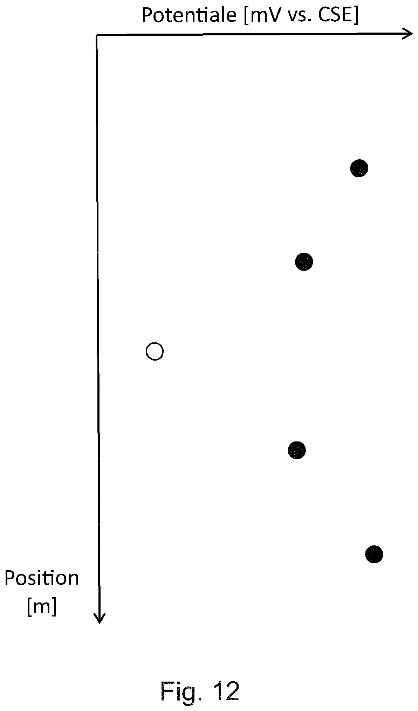

Fig. 12 shows an example result of the series of electrochemical measurements performed along the material 3 covering the metal structure 1 of Fig. 11. The x-axis depicts a measurement position along the material 3 covering the metal structure 1 of Fig. 11 and the y-axis depicts measurement value of the electrical potential measured at specific locations along the material 3 covering the metal structure 1. As can be seen from comparing Fig. 11 and Fig. 12, the measured electrical potential exhibits a minimum at the corrosion region 27, indicating corrosion phenomena at this region of the metal element 1. Two locations at which successive electrochemical measurements are carried out may be spaced less than a characteristic measurement distance. The characteristic measurement distance is preferably chosen to be less than 1 m, which is smaller than the length scale over which the state of corrosion is known to vary substantially. For example, the stream is moved by 15 cm to 100 cm between two subsequent electrochemical measurements. As such, the invention advantageously permits to assess the state of corrosion of the metal element 1 in a quasi-continuous manner, such that no gaps of unknown, potentially dangerous states of corrosion of the metal element 1 remain while keeping a measurement time and thus the effort and costs at a minimum.

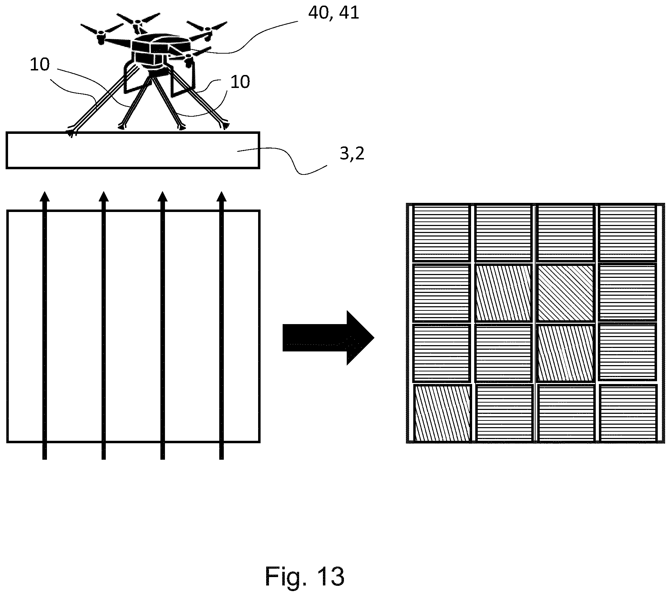

Fig. 13 shows another embodiment for assessing corrosion phenomena on at least one metal element 1, compared to the embodiment shown in Figs. 11 and 12. In the present embodiment, a drone 41 is used to direct a stream 10 of electrolyte along a predetermined path between different locations on the material 3. Other than in the embodiment of Figs. 11 and 12, the device 11 now carries out electrochemical measurements not while keeping the stream 10 fixed at respective locations, but while moving the stream 10 between different locations. As such, the state of corrosion of the metal element 1 may be determined in a continuous manner along the predetermined path on the material 3. For example, the predetermined path may comprise a plurality of lines extending over the material 3, such that a map reflecting the spatial potential field on the surface of the material 3 may be obtained. In the bottom right panel of

Fig. 13, cells with different line slopes indicate different states of corrosion detected at different locations with respect to the metal element 1. The stream 10 may for example be moved between different locations with a velocity of between 10 µm/s and 15 m/s, which is fast enough to efficiently probe large areas and slow enough to ensure reliable electrochemical measurements. Regions with low measured electrical potential correspond to areas of one or more metal elements 1 with anodic potential, which points to corrosion phenomena.

**List of reference signs**

| | |
|---|---|
| Metal element | 1 |
| Concrete structure | 2 |
| Material | 3 |
| Electrolyte volume | 4 |
| Electrode | 5 |
| Container | 6 |
| Opening | 9 |
| Stream | 10 |
| Device | 11 |
| Measuring unit | 12 |
| Cantilever retaining wall | 15 |
| Construction joint | 16 |
| Foundation slab | 17 |
| Stem | 18 |
| Embarkment | 19 |
| Inspection window | 20 |
| Drill hole | 21 |
| Inspection shaft | 22 |
| First electrical wire | 23a |
| Second electrical wire | 23b |
| Electrolyte supply line | 24 |
| Measuring device | 25 |
| Isopotential line | 26 |
| Corrosion region | 27 |
| Electrolyte storage | 28 |
| Maintenance shaft | 35 |
| Carrier | 36 |
| User | 37 |
| Stream control device | 38 |
| Electrolyte pump | 39 |
| Vehicle | 40 |
| Drone | 41 |
| Car | 42 |

## Claims

1. Method for assessing corrosion phenomena on at least one metal element (1), wherein an electrode (5) is in electrically conductive connection with an electrolyte volume (4) positioned outside a metal element (1) or a material (3) that is electrolytically conductive or can be made electrolytically conductive and that is at least partially covering the metal element (1), and wherein the electrolyte volume (4) is brought into electrically conductive contact with the metal element (1) or the material (3) via a stream (10) of electrolyte, and wherein an electrochemical measurement indicative of a state of corrosion on the metal element (1) is carried out.

2. The method for assessing corrosion phenomena according to claim 1, wherein the stream (10) of electrolyte passes through an opening (9) of a container (6) for receiving the electrolyte volume (4).

3. The method for assessing corrosion phenomena according to one of the claims 1 or 2, wherein the stream (10) of electrolyte is subsequently directed to different locations on the metal element (1) or the material (3), such that the stream (10) of electrolyte subsequently establishes an electrically conductive connection between the electrode (5) and the metal element (1) or between the electrode (5) and the material (3) at different locations, and wherein electrochemical measurements are carried out at at least one of the locations, such that spatial information indicative of the state of corrosion is obtained in an area comprising the at least two locations on the metal element (1) or the material (3).

4. The method for assessing corrosion phenomena according to claim 3, wherein the electrochemical measurements are carried out while keeping the stream (10) of electrolyte at respective locations for a predetermined electrochemical measurement time.

5. The method for assessing corrosion phenomena according to claims 3 or 4, wherein the electrochemical measurements are carried out while moving the stream (10) of electrolyte between different locations on the metal element (1) or the material (3).

6. The method for assessing corrosion phenomena according to one of the preceding claims, wherein one of the following parameters is varied: a flow rate of the stream (10) of electrolyte; a stream diameter of the stream (10) of electrolyte; a flow path of the stream (10) of electrolyte.

7. Device (11) for assessing corrosion phenomena on at least one metal element (1), comprising an electrode (5) for forming an electrically conductive connection with an electrolyte volume (4) that is or can be received by a container (6) of the device (11), wherein the device (11) is configured to bring the electrolyte volume (4) into electrically conductive contact with the metal element (1) or a material (3) that is electrolytically conductive or can be made electrolytically conductive and that is at least partially covering the metal element (1) by means of a stream (10) of electrolyte generated out of an opening (9) of the container (6), and wherein the device (11) further comprises a measuring unit (12) for measuring a signal indicative of a state of corrosion on the metal element (1).

8. The device (11) for assessing corrosion phenomena on at least one metal element (1) according to claim 7, comprising an electrolyte supply line (24) for supplying the container (6) with electrolyte.

9. The device (11) for assessing corrosion phenomena on at least one metal element (1) according to claim 8, comprising an electrolyte storage (28) for storing electrolyte, such that the electrolyte can be conducted from the electrolyte storage (28) to the container (6) via the electrolyte supply line (24).

10. The device (11) for assessing corrosion phenomena on at least one metal element (1) according to one of the claims 7 to 9, wherein the electrode (5) is at least partially arranged or arrangeable in the container (6) or in the electrolyte supply line (24).

11. The device (11) for assessing corrosion phenomena on at least one metal element (1) according to one of the claims 7 to 9, wherein the electrode (5) is at least partially arranged or arrangeable in the electrolyte storage (28).

12. The device (11) for assessing corrosion phenomena on at least one metal element (1) according to one of the claims 7 to 11, wherein a volume of the container (6), a volume of the electrolyte storage (28) and/or a volume of the electrolyte supply line (24) is configured to be compressed to generate the stream (10) of electrolyte out of the opening (9) of the container (6).

13. System (100) for assessing corrosion phenomena on at least one metal element (1), wherein the system comprises the device (11) according to one of the claims 7 to 12 and a vehicle (40) configured to carry at least the container (6) of the device (11), such that the stream (10) of electrolyte can establish an electrically conductive connection between the electrode (5) and the metal element (1) or said material (3) at least partially covering the metal element (1) at at least one location with respect to the metal element (1) by moving the container (6) with respect to the metal element (1) and the at least one location using the vehicle (40).

14. The system (100) for assessing corrosion phenomena on at least one metal element (1) according to claim 13, wherein the vehicle (40) is configured to carry at least the container (6) of the device (11), such that the stream (10) of electrolyte can establish an electrically conductive connection between the electrode (5) and the metal element (1) or said material (3) at least partially covering the metal element (1) at different locations with respect to the metal element (1) by moving the container (6) with respect to the metal element (1) and the locations using the vehicle (40).

15. The system (100) for assessing corrosion phenomena on at least one metal element (1) according to claim 13 or 14, wherein the vehicle (40) is or comprises one of the following: a land vehicle (42), a watercraft, or an aircraft (41).
